Europäisches Patentamt

European Patent Office

Office européen des brevets

(11) Publication number: **0 129 545**
**B1**

(12) **EUROPEAN PATENT SPECIFICATION**

(45) Date of publication of patent specification: **08.03.89**

(51) Int. Cl.⁴: **B 64 C 3/50**

(21) Application number: **83900892.7**

(22) Date of filing: **28.12.82**

(86) International application number:
**PCT/US82/01797**

(87) International publication number:
**WO 84/02506 05.07.84 Gazette 84/16**

(54) **VARIABLE CAMBER LEADING EDGE ASSEMBLY FOR AN AIRFOIL.**

(43) Date of publication of application:
**02.01.85 Bulletin 85/01**

(45) Publication of the grant of the patent:
**08.03.89 Bulletin 89/10**

(84) Designated Contracting States:
**DE FR GB NL**

(56) References cited:
**EP-A-0 045 988**
**GB-A-2 006 133**
**GB-A-2 013 593**
**US-A-1 773 530**
**US-A-3 716 209**

(73) Proprietor: **The Boeing Company**
**P.O. Box 3707**
**Seattle Washington 98124 (US)**

(72) Inventor: **COLE, James, Byron**
**8212 Southeast 62nd Street**
**Mercer Island, WA 98040 (US)**

(74) Representative: **Konings, Lucien Marie Cornelis**
**Joseph et al**
**OCTROOIBUREAU ARNOLD & SIEDSMA**
**Sweelinckplein 1**
**NL-2517 GK Den Haag (NL)**

Courier Press, Leamington Spa, England.

**Description**

The present invention relates to a lift modifying assembly for an airfoil, as defined in the introductory part of claim 1. Such an assembly is known from GB-A-2 006 133.

A difficulty encountered with leading edge devices of this kind, is that during deployment there is an interruption of smooth airflow over the upper surface of the airfoil. Therefore, the assembly known from the mentioned British patent application comprises additional linkage means connected to the flexible skin, to obtain a curvature of the flexible skin during deployment, which is favourable in aerodynamic regard and reduces the mentioned problem.

Variable camber leading edges of the present kind are particularly desirable in solving the airfoil stall problem for small, thin, swept-back wings which have good cruise performance, but require high lift devices to make their low speed performance acceptable. However, there is a problem of installing such variable camber leading edge devices on such wings, since these thin wings have the least space available in which to house such devices.

Accordingly it is an object of the present invention to provide a device of the kind set forth above, with a flexible upper skin panel which is moved from a cruise position to a more curved high lift position, with the flexible panel having a desired aerodynamic contour throughout its path of travel between the upper cruise position and the downwardly deflected position, with the assembly being relatively compact, and with the major part of the aerodynamic load on the assembly being transmitted into the support structure so as to relieve loading on the drive mechanism of the assembly.

This object is achieved with a device according to the invention, by the measures of the characterizing part of claim 1. In this way the movement of the nose section from the first to the second position can be precisely controlled, so that a proper aerodynamic contour of the upper skin panel can be obtained throughout the movement of the assembly.

From GB-A-2 013 593 already a cam track guide arrangement for a flap is known, comprising a cam track with a lengthwise axis in a true circular arc, or consisting of two parts each with an axis in a true circular arc form.

Other features of the invention are characterized in the subclaims, and the invention with this further features will become apparent from the following detailed description.

DESCRIPTION OF THE DRAWINGS

Figure 1 is a chordwise sectional view of the leading edge assembly of the present invention in its upper position for cruise mode;

Figure 2 is a view similar to Figure 1, but showing the leading edge assembly in an intermediate deflected position;

Figure 3 is a view similar to FIGURE 1, but showing the leading edge assembly in its downwardly extending, high lift position; and

Figure 4 is a semischematic view similar to Figure 1, and showing the manner in which the aerodynamic forces are reacted into the structure.

DESCRIPTION OF THE PREFERRED EMBODIMENT

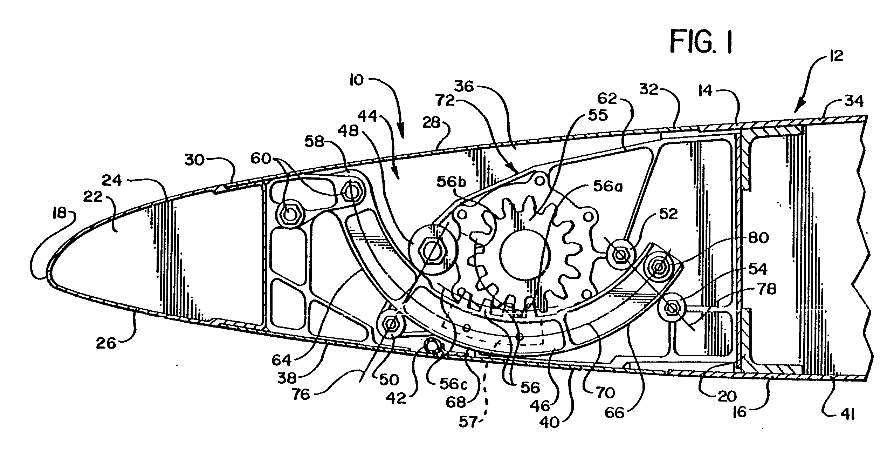

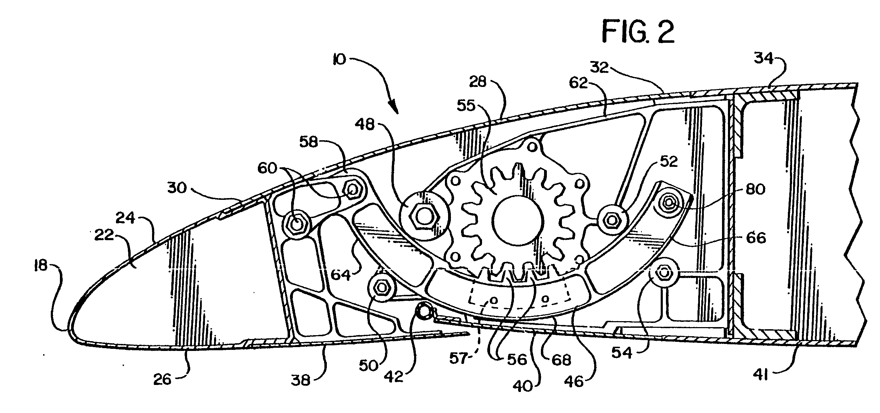

With reference to FIGURES 1 and 2, there is shown a leading edge assembly 10 which forms the forward portion of a wing 12. For convenience of illustration, only the forward portion of the wing 12 is shown. The wing 12 has an upper surface 14, a lower surface 16, a leading edge 18, and a trailing edge (not shown for ease of illustration). The wing 12 has a main support structure, comprising a front spar 20 to which the leading edge assembly 10 is mounted.

At the leading edge 18, there is a nose section 22 in the form of a substantially rigid beam extending in a spanwise direction along the wing leading edge 18. The nose section 22 has an upper surface 24 and a lower surface 26. There is a flexible upper skin panel 28 which has (a) a forward part 30 which is attached to the upper rear portion of the nose section 22 and blends into the upper surface 24 of the nose section 22; (b) a rear part 32 which butts against and is aligned with the main upper skin 34 at the location of the front spar 20, and a flexible intermediate portion 36 which reaches between the front part 30 and the rear part 32.

The lower surface of the leading edge assembly 10 comprises a forward portion 38 connected to and extending rearwardly from the lower edge of the nose section 22, and a rear portion 40 which is a forward extension of the main lower skin section 41 at the lower part of the front spar 20. At the front edge of the rear portion 40, there is a seal 42 to close the small gap at the juncture of the lower skin portions 38 and 40.

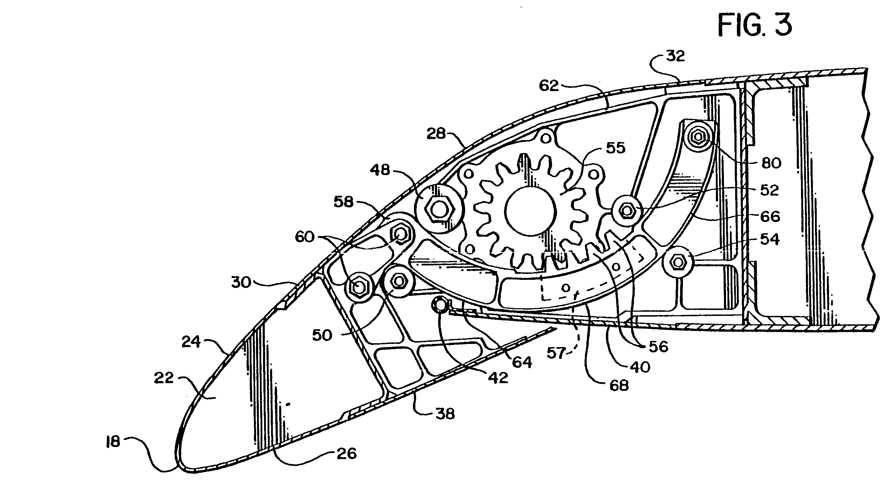

Of particular significance in the present invention is an actuating assembly, generally designated 44, which functions to move the nose section 22 from an upper cruise position shown in Figure 1 through an intermediate position of Figure 2, to a fully deflected high lift position, shown in Figure 3. This is accomplished in a manner that as the assembly 10 moves from the position of Figure 1 to that of Figure 3, the curvature of the upper skin panel 28 progressively increases so as to assume a proper aerodynamic contour throughout the movement of the assembly 10 from its cruise configuration to its fully downwardly deflected position. During such downward movement, the forward lower skin portion 38 simply moves downwardly with the nose section 22 to separate from the rear portion 40, with the rear edge of the forward lower skin portion 38 moving rearwardly beneath the rear lower skin portion 40.

The actuating assembly 44 comprises a generally arcuately shaped cam track 46 and cam track contact means comprising forward and rear sets of rollers, the forward set being made up of upper and lower rollers 48 and 50, and the rear set being made up of upper and lower rear rollers 52 and 54. Also, there is a drive means which, in the preferred embodiment, comprises a drive gear 55 which meshes with upwardly facing gear teeth 56 at the middle portion of the cam track 46. The gear teeth are formed on a gear segment between halves of the cam track 46.

The forward end of the cam track 46 is formed with a clevis 58 which isrigidly connected to the nose section 22 through two connecting locations 60. The four rollers 48-54 are rotatably mounted to a support rib 62 which is fixedly connected to and extends forwardly from the front spar 20.

The cam track 46 can be considered as having a forward cam track section 64, a rear cam track section 66 and an intermediate drive section 68. The upper and lower surfaces of the forward cam section 64 contact the upper and lower front rollers 48 and 50, respectively. The rear cam section 66 has upper and lower surfaces which contact the upper and lower rear rollers 52 and 54, respectively. The intermediate drive section 68 is the portion of the cam track 46 having the teeth 56 that engage the drive gear 55.

The cam track 46 has a generally arcuate configuration, and has a lengthwise axis which, for purposes of illustration, has been drawn as a circular arc, indicated at 70, and having a center of curvature at 72. However, for reasons which will be explained more fully hereinafter, the lengthwise axis 70 of the track 46 deviates slightly from a true circular arc so as to program the movement of the nose section 22 more precisely so as to obtain the proper degree of curvature of the upper skin panel 28 throughout its movement from the cruise position of Figure 1, through the intermediate position of Figure 2 to the full down position of Figure 3, while maintaining proper engagement of the pinion gear 55 with the gear segment teeth 56.

The rollers 48 and 50 are positioned substantially opposite one another relative to the lengthwise axis 70, as are the two rollers 52 and 54. The center axes of the rollers 48 and 50 are arranged along a line 76 that slants upwardly and rearwardly toward the center of curvature 72. The center axes of the rear rollers 52 and 54 are aligned on a line 78 that extends upwardly and forwardly toward the center of curvature 72.

In the cruise position of Figure 1, the track 46 is at its forwardmost position, so that the forward rollers 48 and 50 engage the lower rear portion of the forward cam track section 64, and the rear rollers 52 and 54 engage the upper rear portion of the rear cam section 66. In that same position, the pinion gear 55 engages the rearwardly located teeth 56. Although not illustrated herein, it is to be understood that the two rollers 48 and 50 are arranged in a suitable support structure which has side load pads that engage lateral surfaces of the cam track 46 to keep the track 46 properly located on rollers 48 and 50. The rear rollers 52 and 54 have a similar support structure and side load pads. Further, the rear end of the track 46 has a stop member 80 which limits the forward rotation of the track 46 by engaging the side load support pads for the rear rollers 52 and 54. Likewise, the clevis 58 serves as a stop member by coming into engagement with the forward support rollers 48 and 50 when the assembly 10 is in its full down position of Figure 3.

Also, it is to be understood that the leading edge assembly 10 is shown at only one cord length location of the wing 10. It is to be understood that there are similar assemblies 10 at other spanwise locations along the length of the wing 12. The drive gears 55 at these various locations can be interconnected by a drive shaft so as to be driven from a common power source.

In operation, to move the assembly 10 from the upper cruise position of Figure 1, the drive gear 55 is rotated counterclockwise, as seen in Figure 1. This causes the cam track 46 to travel in a path closely following the arc approximated by the axis 70 so that the center of rotation is relatively close to the center of curvature 72 of the arc. When the assembly 10 reaches the intermediate position of Figure 2, the nose section 22 has moved downwardly and moderately rearwardly, and also has rotated so that it is at more of a downward and forward slant. Further, at this location the movement of the nose section 22 has been such so that the forward part 30 and rear part 32 of the skin panel 28 have moved moderately closer to one another so as to place the flexible intermediate portion 36 of the panel 28 in a rather moderate curve, as shown in Figure 2. This curvature is such that it forms a proper aerodynamic contour of the upper skin section extending from the nose section 22 to the location of the forward spar 20. Further counterclockwise rotation of the gear 55 causes the cam track 46 to move further rearwardly in the rollers 48-54 so as to deflect the nose section 22 yet further downwardly to the position of Figure 3.

With regard to the precise alignment of the lengthwise center axis 70 of the cam track 46, for purposes of description, let it be assumed for the moment that the lengthwise axis 70 is formed exactly in a true circular arc having a location and degree of curvature which would move the nose section 22 from the position of Figure 1 to the fully downwardly deflected position of Figure 3. For purposes of the following analysis, that particular circular arc shall be termed the "reference arc line". If the entire alignment of the axis 70 did correspond exactly to this reference arc line, the movement of the nose section 22 would follow generally a path which would give an unacceptably flat aerodynamic contour to the flexible skin panel 36 throughout its path of travel from the full up position to the fully downwardly deflected position, because the center of rotation would coincide exactly with the center of curvature 72.

However, to fine tune the movement of the nose section 22 to obtain the desired aerodynamic contour of the panel 36 more precisely throughout the path of travel of the nose section 22, it is desirable to position the middle portion of the forward cam track section 64 moderately outwardly from the arc reference line. Thus, during movement of the nose section 22 from the position of Figure 1 toward the intermediate position of Figure 2, the center of rotation of the nose section 22 shifts a moderate distance rearwardly in a manner to increase the amount of curvature of the flexible panel section 36 to a moderate degree more than it would be otherwise for that particular location on its path of travel.

However, it must be kept in mind that the movement of the intermediate drive section 68 must be such that the gear teeth 56 remain in proper meshing engagement with the teeth of the drive gear 55. This requires that the positioning of that portion of the axis 70 that passes through the rear portion 66 of the cam track 46 be shifted from the reference arc line in a manner to compensate for the shifting of the forward cam track section 64 from the reference arc line. Thus, where the forward cam section would have a portion thereof positioned moderately radially outwardly relative to the center of curvature 72, the corresponding portion of the rear section 66 (i.e. the portion which would be engaged by the rear rollers 52 and 54 at the same time that the portion of the forward section 64 was engaged by the forward rollers 48 and 50) would be positioned radially inwardly to a moderate extent. This would give the entire cam track 46 what might be described as a slight rocking motion as it moves in a generally arcuate path from the full forward position in Figure 1 to the full rear position of Figure 3. This slight rocking motion would be about a pivot axis which is at the tangent point 56a of the two gear pitch circles, indicated at 56b and 56c.

The axis 70 is contoured in a manner that the center of rotation about which the nose section 22 moves shifts generally rearwardly during movement of the nose section 22 from the position of Figure 1 to the position of Figure 3.

The kinematic program provided by the cam track 46 is one in which the arc height of the upper skin panel 28 is increased in a linear manner, with the gear teeth 56 held in proper mesh on the pitch circles of the gear 55 and the gear rack 57 as the nose section 22 is deflected from the cruise position of Figure 1 to the fully downwardly deflected position of Figure 3. This program is tailored to insure that no curvature reversal occurs in the panel 28 throughout its full bending excursion, since such curvature reversal would compromise its fatigue life.

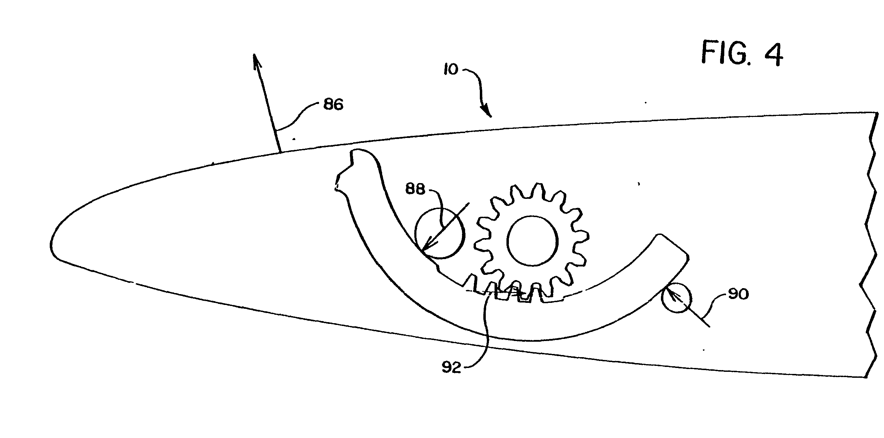

To explain yet another facet of the present invention, reference is made to Figure 4 which shows an arrow 86 that represents the net lift component exerted on the leading edge assembly 10 as the result of aerodynamic loads imposed on the wing 10 when cruising at design speed. It can be seen that the net force component is generally upward and moderately forward so as to tend to pull the nose section 22 upwardly. In the particular configuration shown herein, these loads are reacted in a manner that approximately 60% of the loads are transmitted from the track 46 directly into the rollers. More precisely, the forward upper roller 48 exerts a downward and forward force component 88 normal to the plane of surface contact of the roller 48 with the upper surface of the cam track 46. The lower rear roller 54 exerts a forward and upward force component 90, which component 90 is normal to the plane of surface contact of the roller 54 with the lower surface of the track 46. The two force components 88 and 90 provide resistance to the upward movement of the nose section 22, but create a resultant force component 92 in a forward direction so as to tend to move the track 46 forwardly. This forward force component 92 is resisted by the gear 55 engaging the teeth 56. However, since the force component 92 is only about 40% of the aerodynamic force 86, the drive components for the gear 55 and the gear itself can be made smaller and lighter, than it would be if it were required to react against a greater proportion of the aerodynamic load.

As the assembly 10 is moved downwardly, the aerodynamic loads tending to pull the nose section 22 upwardly become somewhat less. Thus, the force component illustrated in Figure 4 represents the maximum load condition on the assembly 10.

While the present invention is particularly adapted to be used in, and to uniquely resolve the problems of, a variable camber leading edge assembly of an airfoil, within the broader aspects of the present invention, it could be utilized in other arrangements relative to an airfoil or similar device. Specifically, in the following claims, it is to be understood that while this assembly is recited as a leading edge assembly, the term "leading edge assembly" is to be interpreted broadly enough to refer to an assembly positioned at the trailing edge of an airfoil, in which case the terms "forward" and "rear" would simply be reversed within the meaning of the claims. Also, it is to be understood that various modifications could be made without departing from the basic teachings of the present invention.

## Claims

1. A leading edge assembly (10) for an airfoil (12) having an upper surface (14), a lower surface (16) a leading edge (18) and a trailing edge, said assembly comprising:
a main support structure (20) for the airfoil;
a nose section (22) at said leading edge;
an upper skin panel (28) having a rear part (32) connected to said structure (20), a forward part (30) connected to said nose section (22), and an intermediate flexible panel portion (36) extending between the rear part and the forward part;
actuating means (44) operatively connected between said nose section (22) and said support structure (20) to move said nose section (22) about a general center of rotation (72) between a first upper position where the flexible panel portion (36) has a lesser degree of curvature and said nose is more horizontally aligned, to a second lower position where the flexible panel portion (36) has a greater degree of curvature and the nose section (22) is aligned in a more downward slant, in a manner that curvature of the flexible panel portion (36) increases with movement of the nose section (22) toward its second position, said actuating means (44) comprising a cam track (46) connected to one of said support structure (20) and said nose section (22), and a cam track contact member connected to the other of said support structure and said nose section, said cam track (46) having a lengthwise axis curved in a generally arcuate path,

characterized in that said cam track (46) is generally curved about said general center of rotation (72), which is positioned at an upper part of said assembly between the forward and rear parts of said upper skin panel (28), the lengthwise axis (70) of said cam track deviating at least partially from a true circular arc, in a manner that said general center of rotation (72) shifts during movement of the nose section between the first and second positions, whereby a proper aerodynamic contour of said upper skin panel (28) can be obtained, said cam track contact member and said cam track (46) being operatively interconnected to be constrained to move relative to one another along a path aligned with the lengthwise axis:

and in that drive means (55) are provided to move the cam track and the cam track engaging member relative to one another to move the nose section (22) between its first and second positions.

2. The assembly as recited in claim 1, characterized in that said cam track (46) has a forward end (58) connected to said nose section (22) and said cam track contact member is connected to said support structure (20) said cam track contact member contacting said cam track (46) at two spaced locations (76,78) along the lengthwise axis (70) to restrain angular movement of the cam track relative to the cam track contact member, and in that said drive means comprises a rotatably mounted drive gear engaging said cam track (46) at a drive location spaced from said two support locations.

3. The assembly as recited in claim 2, characterized in that said cam track contact member comprises two roller means (48, 54) contacting said cam track at said spaced locations, and said drive gear (55) is located with its drive location positioned intermediate said support locations.

4. The assembly as recited in one of the preceding claims, characterized in that the lengthwise axis (70) of said cam track is contoured to cause said general center of rotation (72) to shift rearwardly during movement of said nose section (22) from said first position to said second position.

**Patentansprüche**

1. Profilvorderkantenanordnung (10) für eine Tragfläche (12), die eine obere Oberfläche (14), eine untere Oberfläche (16), eine Profilvorderkante (18) und eine Profilhinterkante hat, wobei diese Anordnung folgendes umfaßt:

eine Haupttragsstruktur (20) für die Tragfläche;

einen Nasenabschnitt (22) an der Profilvorderkante;

eine obere Hautplatte (28), die einen rückwärtigen Teil (32) hat, der mit der Struktur (20) verbunden ist, einen vorderen Teil (30), der mit dem Nasenabschnitt (22) verbunden ist, und einen flexiblen zwischenliegenden Plattenteil (36), der sich zwischen dem rückwärtigen Teil und dem vorderen Teil erstreckt;

eine eine operative Verbindung zwischen dem Nasenabschnitt (22) und der Tragstruktur (20) bildende Betätigungseinrichtung (44) zum Bewegen des Nasenabschnitts (22) um ein generelles Drehzentrum (72) zwischen einer ersten, oberen Position, worin der flexible Plattenteil (36) einen geringeren Grad an Krümmung hat und die Nase horizontaler ausgerichtet ist, in eine zweite, untere Position, worin der flexible Plattenteil (36) einen größeren Grad an Krümmung hat und der Nasenabschnitt (22) in einer abwärtigeren Schräge ausgerichtet ist, und zwar in einer Art und Weise, daß die Krümmung des flexiblen Plattenteils (36) mit der Bewegung des Nasenabschnitts (22) nach dessen zweiter Position zu zunimmt, wobei die Betätigungseinrichtung (44) eine Kurvenschiene (46) umfaßt, die mit der einen Komponente aus den Komponenten Tragstruktur (20) und Nasenabschnitt (22) verbunden ist, und ein Kurvenschienenkontaktteil, das mit der anderen Komponente aus den Komponenten Tragstruktur und Nasenabschnitt verbunden ist, wobei die Kurvenschiene (46) eine längsweise Achse hat, die in einem generell bogenförmigen Weg gekrümmt ist,

dadurch gekennzeichnet, daß die Kurvenschiene (46) generell um das generelle Drehzentrum (72) gekrümmt ist, welches in einem oberen Teil der Anordnung zwischen dem vorderen und rückwärtigen Teil der oberen Hautplatte (28) positioniert ist, wobei die längsweise Achse (70) der Kurvenschiene wenigstens teilweise von einem wahren Kreisbogen abweicht, und zwar in einer Art und Weise, daß sich das generelle Drehzentrum (72) während der Bewegung des Nasenabschnitts zwischen der ersten und zweiten Position verschiebt, wodurch eine angemessene aerodynamische Kontur der oberen Hautplatte (28) erhalten werden kann, wobei das Kurvenschienenkontaktteil und die Kurvenschiene (46) operativ miteinander verbunden sind, so daß sie sich zwangsweise relativ zueinander entlang einem Weg bewegen, der mit der längsweisen Achse fluchtet;

und dadurch, daß eine Antriebseinrichtung (55) zum Bewegen der Kurvenschiene und des Kurvenschieneneingriffsteils relativ zueinander, um den Nasenabschnitt (22) zwischen seiner ersten und zweiten Position zu bewegen, vorgesehen ist.

2. Anordnung nach Anspruch 1, dadurch gekennzeichnet, daß die Kurvenschiene (46) ein vorderes Ende (58) hat, das mit dem Nasenabschnitt (22) verbunden ist, und das Kurvenschienenkontaktteil mit der Tragstruktur (20) verbunden ist, wobei das Kurvenschienenkontaktteil die Kurvenschiene (46) an zwei im Abstand voneinander befindlichen Orten (76, 78) entlang der längsweisen Achse (70) kontaktiert, um die Winkelbewegung der Kurvenschiene relativ zu dem Kurvenschienenkontaktteil zu behindern, und daß die Antriebseinrichtung ein drehbar montiertes Antriebszahnrad umfaßt, das im Eingriff mit der Kurvenschiene (46) an einem Antriebsort ist, der von den beiden Abstützungsorten im Abstand angeordnet ist.

3. Anordnung nach Anspruch 2, dadurch gekennzeichnet, daß das Kurvenschienenkontaktteil zwei Rolleneinrichtung (48, 54) umfaßt, welche die Kurvenschiene an den erwähnten, im Abstand voneinander befindlichen Orten kontaktieren, und daß das Antriebszahnrad (55) so angeordnet ist, daß sein Antriebsort zwischen den Abstützungsorten positioniert ist.

4. Anordnung nach einem der vorhergehenden Ansprüche, dadurch gekennzeichnet, daß die längsweise Achse (70) der Kurvenschiene so konturiert ist, daß bewirkt wird, daß sich das generelle Drehzentrum (72) während der Bewegung des Nasenabschnitts (22) von der ersten Position zu der zweiten Position nach rückwärts verschiebt.

**Revendications**

1. Ensemble (10) de bord d'attaque destiné à un profil aérodynamique (12) ayant une surface supérieure (14), une surface inférieure (16), un bord d'attaque (18) et un bord de fuite, l'ensemble comprenant:

une structure principale (20) de support du profil aérodynamique,

un tronçon (22) de nez placé au bord d'attaque,

un panneau supérieur (28) de revêtement ayant une partie arrière (32) raccordée à la structure (20), une partie avant (30) raccordée au tronçon de nez (22), et une partie intermédiaire souple (36) de panneau disposée entre la partie arrière et la partie avant,

un dispositif (44) de manoeuvre raccordé entre le tronçon de nez (22) et la structure de support (20) afin que le tronçon de nez (22) soit déplacé autour d'un centre général de rotation (72) entre un première position supérieure dans laquelle la partie de panneau souple (36) a un moindre degré de courbure et le nez a un alignement relativement horizontal, et une seconde position dans laquelle la partie de panneau souple (36) a un plus grand degré de courbure et le tronçon de nez (22) est aligné sur une position plus inclinée vers le bas, d'une manière telle que la courbure de la partie de panneau souple (36) augmente lors du déplacement du tronçon de nez (22) vers sa seconde position, le dispositif de manoeuvre (44) comprenant une voie (46) de came raccordée à la structure de support (20) ou au tronçon de nez (22), et un organe e contact avec la voie de came, raccordé au tronçon de nez ou à la structure de support respectivement, la voie de came (46) ayant un axe longitudinal recourbé suivant un trajet courbe de façon générale,

caractérisé en ce que la voie (46) de came est courbée de façon générale autour d'un centre général de rotation (72) qui est placé dans une partie supérieure de l'ensemble entre les parties avant et arrière du panneau supérieur de revêtement (28), l'axe longitudinal (70) de la voie de came s'écartant au moins partiellement d'un arc de cercle véritable, de manière que le centre général de rotation (72) se déplace pendant le déplacement du tronçon de nez entre la première et la seconde position, si bien qu'un profil aérodynamique convenable du panneau supérieur (28) de revêtement peut être obtenu, l'organe de contact avec la voie de came et la voie (46) de came elle-même étant raccordés de manière qu'ils soient obligés de se déplacer l'un par rapport à l'autre suivant un trajet aligné sur l'axe longitudinal, et

en ce qu'un dispositif (55) d'entraînement est disposé afin qu'il déplace la voie de came et l'organe de contact avec la voie de came l'un par rapport à l'autre et déplace le tronçon (22) de nez entre sa première et sa seconde position.

2. Ensemble selon la revendication 1, caractérisé en ce que la voie (46) de came a une extrémité avant (58) raccordée au tronçon de nez (22) et l'organe de contact avec la voie de came est raccordé à la structure de support (20), l'organe de contact avec la voie de came étant au contact de la voie (46) de came à deux emplacements distants (76, 78) le long de l'axe longitudinal (70) afin que le déplacement angulaire de la voie de came par rapport à l'organe de contact soit limité, et en ce que le dispositif d'entraînement comporte un pignon menant monté de manière qu'il puisse tourner et coopérant avec la voie (46) de came à un emplacement d'entraînement distant des deux emplacements de support.

3. Ensemble selon la revendication 2, caractérisé en ce que l'organe de contact avec la voie de came comporte deux dispositifs à galet (48, 54) qui sont au contact de la voie de came aux emplacements distants, et le pignon menant (55) est disposé de manière que son emplacement d'entraînement soit placé entre les emplacements de support.

4. Ensemble selon l'une quelconque des revendications précédentes, caractérisé en ce que l'axe longitudinal (70) de la voie de came a un profil tel que le centre général de rotation (72) se déplace vers l'arrière pendant le déplacement du tronçon de nez (22) de la première position à la seconde position.

FIG. 1

EP 0 129 545 B1

FIG. 2

# FIG. 3

FIG. 4